# EUROPÄISCHE PATENTSCHRIFT

(11) **EP 1 748 858 B1**
(45) Veröffentlichungstag und Bekanntmachung des Hinweises auf die Patenterteilung: **10.10.2007**
(21) Anmeldenummer: 05746449.7
(22) Anmeldetag: 06.05.2005
(51) Int. Cl.: B22D 1/00, B22D 11/10, B22D 11/111

(54) **VERFAHREN ZUR BEHANDLUNG EINER METALLSCHMELZE**
METHOD FOR TREATING MOLTEN METAL
PROCEDE POUR USINER DU METAL EN FUSION

(30) Priorität: 19.05.2004 WO PCT/EP2004/005417
(43) Veröffentlichungstag der Anmeldung: 07.02.2007
(73) Patentinhaber: Metakon Gmbh, 44701 Bochum (DE)
(72) Erfinder: NOACK, Hans-Peter, 44797 Bochum (DE)
(74) Vertreter: Schneiders, Josef
(86) Internationale Anmeldenummer: PCT/EP2005/004948
(87) Internationale Veröffentlichungsnummer: WO 2005/115661

(56) Entgegenhaltungen:
- WO-A-00/61319
- CN-A- 1 349 868
- DE-A- 10 124 926
- DE-C- 19 728 368
- DE-C1- 3 742 415
- GB-A- 2 265 564
- US-A- 4 842 647
- US-A- 5 366 535
- CORMA A ET AL: "NEW ALUMINOSILICATE AND TITANOSILICATE DELAMINATED MATERIALS ACTIVEFOR ACID CATALYSIS, AND OXIDATION REACTIONS USING H2O2" 2000, JOURNAL OF THE AMERICAN CHEMICAL SOCIETY, AMERICAN CHEMICAL SOCIETY, WASHINGTON, DC, US, PAGE(S) 2804-2809 , XP001018883 ISSN: 0002-7863 Zusammenfassung

## Beschreibung

Die Erfindung betrifft ein Verfahren zur Behandlung einer in einem metallurgischen Gefäß befindlichen Metallschmelze, wobei auf die Oberfläche der Metallschmelze ein siliziumoxid- und aluminiumoxidhaltiges, feinkörniges Abdeckmaterial aufgegeben wird.

Es ist bekannt, die Oberflächen von in metallurgischen Gefäßen befindlichen Metallschmelzen mit einer Schicht aus siliziumoxidhaltigem, hochschmelzendem Abdeckmaterial zu bedecken. Diese Abdeckung dient einerseits dazu, die Metallschmelze vor dem Zutritt atmosphärischer Gase (insbesondere Sauerstoff) zu schützen. Andererseits wird durch die Abdeckung eine wirksame Wärmedämmung erzielt, so dass das Abkühlen der Metallschmelze während der Verarbeitung verlangsamt wird. Insbesondere in Gießereien oder in Stahlwerken sind solche Verfahren notwendig, da nur so ein effektiver Schutz der Metallschmelze durch Aufschütten und Verteilen des Abdeckmaterials auf die Oberfläche der Metallschmelze möglich ist.

Allgemein bekannt ist es, zu den obigen Zwecken verschiedene pulverartige, feinkörnige Abdeckmaterialien, wie beispielsweise Perlit oder als Abfallstoff anfallenden Ruß, zu verwenden. Weiterhin bekannt ist die Verwendung von körniger Asche pflanzlichen Ursprungs, insbesondere Reisspreuasche, der zur Granulierung als organisches Bindemittel ein Zellulosebrei, wie Papierstoff oder Pulpe, zugesetzt ist. Als weitere Zuschlagsstoffe kommen bei dem vorbekannten Abdeckmaterial Graphit und Schlacke zum Einsatz. Ferner kann es als zusätzliche Bindemittel unter anderem synthetische Harze und koloidale Kieselsäure enthalten.

Nachteiligerweise ist für das vorbekannte Abdeckmaterial, das auf Pflanzenasche basiert, ein vergleichsweise aufwendiges Herstellungsverfahren erforderlich, um die für die gewünschten Zwecke erforderlichen physikalischen Eigenschaften zu erhalten. Außerdem sind eine Reihe von Zuschlagsstoffen erforderlich, was insgesamt dazu führt, dass das vorbekannte Abdeckmaterial aufgrund zu hoher Kosten für eine regelmäßige Verwendung in der Stahlindustrie nicht in Frage kommt.

Nachteilig ist bei der Verwendung herkömmlicher pulverartiger Abdeckmaterialien außerdem deren vergleichsweise niedrige Schmelztemperatur von nur etwa 1100°C bis 1200°C. Aufgrund der spezifischen physikalischen Eigenschaften der auf die Oberfläche der Metallschmelze aufgebrachten Pulver verbinden sich diese im Laufe der Zeit mit der ebenfalls auf der Oberfläche aufschwimmenden Schlackeschicht. Hierdurch wird einerseits die Schlackemenge unerwünschterweise stark erhöht und andererseits führt die sich kontinuierlich verschlechternde Wärmedämmung dazu, dass die abkühlende Schlacke aushärtet und die für die Metallschmelze verwendeten Gefäße zusetzt, was aufwendige Reinigungsarbeiten erforderlich macht. Nachteilig ist ferner die Tendenz der vorbekannten Abdeckmaterialien, auf der Oberfläche der Metallschmelze und mit den Wandungen der metallurgischen Gefäße zu einer zusammenhängenden Schicht zusammenzubacken. Die niedrige Schmelztemperatur der vorbekannten Abdeckmaterialien hat nachteiligerweise außerdem einen entsprechend hohen Verbrauch zur Folge.

Ein besonderes Problem bei der Abdeckung von in metallurgischen Gefäßen befindlichen Metallbädern besteht darin, dass die gemäß dem Stand der Technik eingesetzten Materialien oft eine unerwünschte Staubentwicklung zeigen. Durch die extreme Luftkonvektion oberhalb der heißen Metallschmelze werden selbst geringste Staubmengen unkontrollierbar in die Umgebung verteilt.

Nachteilig ist bei der Verwendung vorbekannter Materialien zur Abdeckung von Metallschmelzen außerdem, dass sich diese oft auf der Oberfläche der Metallschmelze nur schlecht verteilen lassen. Um eine gleichmäßige Abdeckung der Oberfläche zu erzielen, müssen oft aufwendige und damit kostenintensive Verteilvorrichtungen benutzt werden.

Davon ausgehend liegt der vorliegenden Erfindung die Aufgabe zugrunde, eine Methode zur Abdeckung der Oberflächen von Metallschmelzen bereitzustellen, bei dem die obigen Nachteile vermieden werden. Insbesondere soll eine möglichst geringe Staubentwicklung beim Aufgeben des Abdeckmaterials auf die Oberfläche der Metallschmelze gewährleistet sein. Gleichzeitig soll das verwendete Abdeckmaterial gute Wärmedämmungseigenschaften haben und sich problemlos auf der Oberfläche der Metallschmelze verteilen lassen.

Dies Aufgabe löst die Erfindung ausgehend von einem Verfahren der eingangs genannten Art dadurch, dass das Abdeckmaterial ein künstliches Zeolithmaterial ist, dass im wesentlichen gleiche Anteile von Siliziumoxid und Aluminiumoxid enthält, wobei das Abdeckmaterial eine enge Verteilung von Korndurchmessern aufweist, derart, dass weniger als 20 % der Körner einen Durchmesser von weniger als 30 µm oder mehr als 125 µm haben.

Zeolithe sind bekanntlich mikroporöse Kristalle, die aus Aluminiumsilikatnetzwerken aufgebaut sind. Aufgrund der hohen Porosität haben diese Materialien ausgezeichnete Wärmedämmungseigenschaften. Die geringe Dichte dieser Materialien stellt gleichzeitig sicher, dass das feinkörnige Abdeckmaterial nicht einsinken und sich nicht mit der auf der Metallschmelze aufschwimmenden Schlacke verbinden kann, so dass Verkrustungen der metallurgischen Gefäße wirksam vermieden werden. Durch das geringe spezifische Gewicht des künstlichen Zeolithmaterials ist außerdem eine sichere Trennung der Abdeckschicht von der flüssigen Phase der Metallschmelze gewährleistet.

Wesentlich ist bei dem erfindungsgemäßen Verfahren, dass das feinkörnige Abdeckmaterial die oben angegebene enge Verteilung von Korndurchmessern aufweist. Aufgrund der engen Verteilung von Korndurchmessern bildet das auf die Metallschmelze aufgegebene pulverförmige Abdeckmaterial besonders große Hohlräume zwischen den einzelnen Körnern aus. Durch diese Hohlräume werden die Wärmedämmungseigenschaften weiter verbessert. Besonders vorteilhaft ist ferner, dass das gemäß der Erfindung eingesetzte Abdeckmaterial eine hervorragende Fließfähigkeit auf der Oberfläche der Metallschmelze hat. Das Abdeckmaterial verteilt sich dadurch auf der Oberfläche der Metallschmelze quasi selbsttätig, so dass auf die Benutzung irgendwelcher Verteilvorrichtung verzichtet werden kann. Während die aus dem Stand der Technik vorbekannten Abdeckmaterialien nach dem Aufschütten auf die Oberfläche der Metallschmelze dort zunächst in Form eines Kegels liegen bleiben und dann unter Benutzung geeigneter Vorrichtungen verteilt werden müssen, zerfließt das gemäß der Erfindung auf die Metallschmelze aufgegebene Abdeckmaterial selbstständig und deckt so die Oberfläche der Metallschmelze gleichmäßig ab. Dieses für das erfindungsgemäße Verfahren äußert vorteilhafte Verhalten basiert in erster Linie auf der engen Verteilung von Korndurchmessern des künstlichen Zeolithmaterials. Weiter verbessert wird die Fließfähigkeit des Abdeckmaterials, wenn dessen Körner im wesentlichen kugelförmig ausgebildet sind und eine möglichst glatte Oberfläche haben.

Ein im Sinne der Erfindung geeignetes Abdeckmaterial ist ein künstliches Zeolithmaterial, das auch als so genannter Gleichgewichtskatalysator (englisch "Equilibrium-Catalyst") bezeichnet wird und in der Petrochemie in großen Mengen als Abfallstoff anfällt. Dieses Zeolithmaterial, das bei der Herstellung von Benzin aus Rohöl eingesetzt wird, kann, gegebenenfalls nach einer vorherigen Aufbereitung, zu geringen Kosten für den Einsatz in dem erfindungsgemäßen Verfahren bereitgestellt werden. Besonders vorteilhaft ist, dass dadurch große Mengen von ansonsten aufwendig zu entsorgenden Abfallstoffen einer sinnvollen Verwendung zugeführt werden. Zur Erreichung der erfindungsgemäßen Verteilung von Korndurchmessern kann es erforderlich sein, die mit verschiedenen Korndurchmesserverteilungen in der chemischen Industrie anfallenden verbrauchten Zeolithmaterialien in geeigneter Weise zusammenzumischen und/oder einer Klassierung zu unterziehen.

Typische Zeolithmaterialien, die in der Petrochemie verwendet werden, bestehen zu etwa gleichen Teilen aus Aluminiumoxid und Siliziumoxid. Die übrigen Bestandteile, die in diesen Materialien üblicherweise enthalten sind, stören bei der Verwendung zur Abdeckung von Metallschmelzen gemäß der Erfindung nicht, haben im Gegenteil sogar positive Auswirkungen im Sinne der Erfindung. Wenn das Verhältnis von Aluminiumoxid zu Siliziumoxid größer ist als eins ist, ergibt sich der Vorteil, dass das Abdeckmaterial eine besonders hohe Schmelztemperatur von ca. 1500°C hat. Außerdem kann das Siliziumoxid vorteilhafterweise bei aluminiumberuhigten Stahlschmelzen nicht als Sauerstofflieferant dienen.

In der Praxis hat sich gezeigt, dass das gemäß der Erfindung eingesetzte Abdeckmaterial jeweils bis zu 1 % Titanoxid, Eisenoxid, Magnesiumoxid und Kalziumoxid enthalten kann. Hierdurch werden die für den erfindungsgemäßen Einsatz wesentlichen Eigenschaften des Abdeckmaterials nicht wesentlich beeinträchtigt.

Besonders geeignet ist das erfindungsgemäße Verfahren zur Abdeckung einer Metallschmelze, die sich in einem Stahlverteiler oder in einer Stahlgießpfanne befindet. In einem Stahlverteiler (auch "tundish" genannt) oder in einer Stahlgießpfanne befindet sich die Stahlschmelze über einen vergleichsweise langen Zeitraum, so dass eine effektive Wärmedämmung wichtig ist. Außerdem hat die Stahlschmelze in diesen Gefäßen eine große Oberfläche, die abgedeckt werden muss. Aus diesem Grund ist das erfindungsgemäß eingesetzte Zeolithmaterial wegen seiner hervorragenden Fließfähigkeit besonders geeignet.

Eine sinnvolle Weiterbildung des erfindungsgemäßen Verfahren besteht darin, dass das Abdeckpulver auf eine direkt auf der Metallschmelze befindliche Zwischenschicht aus reaktiver Kalzium-Aluminatschlacke aufgegeben wird. In diesem zweischichtigen Abdecksystem dient die reaktive Kalzium-Aluminatschlacke dazu, einerseits die Metallschmelze vor dem Zutritt atmosphärischer Gase effektiv zu schützen. Andererseits bewirkt die reaktive Kalzium-Aluminatschlacke vorteilhafterweise die Aufnahme unerwünschter nicht-metallischer Einschlüsse aus der Metallschmelze in die Abdeckschicht.

Das auf die reaktive Schlacke aufgegebene künstliche Zeolithmaterial gewährleistet eine effektive Wärmedämmung.

Bei Bedarf kann dem gemäß der Erfindung auf die Metallschmelze aufgegebenen Abdeckmaterial ein Kohlenstofflieferant, wie z.B. Petrolkoks, zugesetzt werden, um die Aufschmelzeigenschaften des Abdeckmaterials zu beeinflussen. Hierdurch kann Petrolkoks als ebenfalls in der Petrochemie anfallender Abfallstoff einer sinnvollen Verwendung zugeführt werden.

In der Praxis kann das Abdeckmaterial besonders einfach in Kunststoffpolymerbeuteln portionsweise abgepackt auf die Oberfläche der Metallschmelze aufgegeben werden. Aufgrund der hohen Temperaturen oberhalb der Metallschmelze von deutlich über 1000°C verbrennen die Kunststoffpolymerbeutel sofort. Danach verteilt sich das Abdeckmaterial aufgrund dessen Fließfähigkeit selbständig auf der Oberfläche der Metallschmelze. Dabei wird jegliche Staubentwicklung wirksam vermieden, was darauf zurückzuführen ist, dass die Körner des gemäß der Erfindung eingesetzten Abdeckmaterials einen Korndurchmesser von wenigstens 30 *µ*m haben.

Gemäß einer sinnvollen Weiterbildung des erfindungsgemäßen Verfahrens besteht das Abdeckmaterial zu einem Anteil von bis zu 40 Gew.-% aus Pflanzenasche. Besonders geeignet ist die eingangs erwähnte Reisspreuasche. Der Zusatz von Pflanzenasche hat den Vorteil, dass dadurch die Isoliereigenschaften des Abdeckpulvers weiter verbessert werden. Zudem ist die Pflanzenasche ein Kohlenstofflieferant, was die Schmelzeigenschaften der Schlacke positiv beeinflusst.

Ein wesentlicher Nachteil der Verwendung reiner Pflanzenasche besteht darin, dass die Asche bei hohen Temperaturen in eine faserige Kristallphase (Cristobalit) übergeht. Diese Kristallfasern sind lungengängig und können Krebs verursachen. Dieser Nachteil wird bei der erfindungsgemäßen Mischung von Pflanzenasche mit künstlichem Zeolithmaterial zuverlässig vermieden. Die Bildung von Cristobalit ist bei der Mischung stark unterdrückt.

In der Praxis hat sich zur Abdeckung von Stahlschmelzen die Verwendung einer Mischung aus mindestens 60 Gew.-% Zeolithmaterial mit bis zu 40 Gew.-% Pflanzenasche besonders bewährt. Bevorzugt ist eine Mischung aus ca. 80 Gew.-% Zeolithmaterial mit ca. 20 Gew.-% Reisspreuasche. Diese Mischung hat vorteilhafterweise fast neutrale Eigenschaften, während herkömmliche Abdeckmaterialen meist sauer reagieren und auf Dauer die Auskleidungen der metallurgischen Gefäße angreifen.

Wesentlich ist, dass bei einem Zusatz von Pflanzenasche in den zuvor angegebenen Grenzen die hervorragenden Fließeigenschaften des Abdeckmaterials nur erhalten bleiben, wenn die erfindungsgemäße Verteilung von Korndurchmessern des Zeolithmaterials eingehalten wird.

Im Folgenden wird ein Ausführungsbeispiel der Erfindung diskutiert.

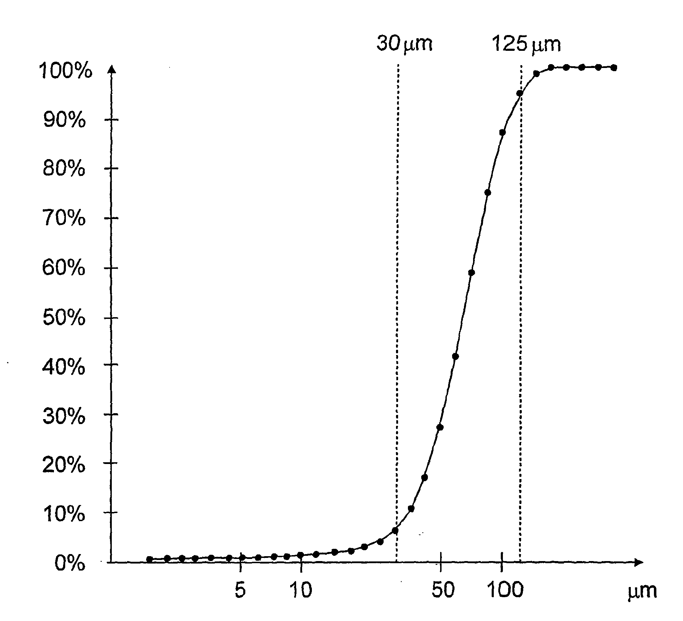

Die beigefügte Zeichnung zeigt ein Diagramm der Verteilung von Korndurchmessern eines gemäß der Erfindung als Abdeckmaterial geeigneten künstlichen Zeolithmaterials. In dem Diagramm ist die Summenverteilung (in %) gegen die Korndurchmesser (in µm) aufgetragen. Dem Diagramm ist zu entnehmen, dass etwa 80 % der Körner Durchmesser zwischen 35 und 125 µm haben. Die sich aus dem Diagramm ergebende enge Verteilung von Komdurchmessern bedingt die oben beschriebenen vorteilhaften Eigenschaften des gemäß der Erfindung eingesetzten Abdeckmaterials.

Aus der folgenden Tabelle ergibt sich die Komdurchmesserverteilung des Zeolithmaterials ziffernmäßig:

| | |
|---|---|
| < 32 µm | 7,8 % |
| > 32 µm | 92,2 % |
| > 45 µm | 79,2 % |
| > 63 µm | 54,3 % |
| > 90 µm | 22,5 % |
| > 125 µm | 4,9% |
| > 250 µm | 0,0 % |

Hinsichtlich der chemischen Zusammensetzung besteht das Abdeckmaterial mit der obigen Verteilung von Korndurchmessern zu etwas 45 % aus Siliziumoxid und geringfügig mehr Aluminiumoxid. Das spezifische Gewicht des Materials liegt im Bereich zwischen 0,8 und 0,9 g/cm³.

## Patentansprüche

1. Verfahren zur Behandlung einer in einem metallurgischen Gefäß befindlichen Metallschmelze, wobei auf die Oberfläche der Metallschmelze ein siliziumoxid- und aluminiumoxidhaltiges, feinkörniges Abdeckmaterial aufgegeben wird, **dadurch gekennzeichnet, dass** das Abdeckmaterial ein künstliches Zeolithmaterial ist, dass im wesentlichen gleiche Anteile von Siliziumoxid und Aluminiumoxid enthält, wobei das Abdeckmaterial eine enge Verteilung von Korndurchmessern aufweist, derart, dass weniger als 20 % einen Durchmesser von weniger als 30 µm oder mehr als 125 µm haben.

2. Verfahren nach Anspruch 1, **dadurch gekennzeichnet, dass** die Körner des Abdeckmaterials im wesentlichen kugelförmig sind.

3. Verfahren nach Anspruch 1 oder 2, **dadurch gekennzeichnet, dass** das Abdeckmaterial vor der Aufgabe auf die Oberfläche der Metallschmelze zur Erreichung der gewünschten Verteilung gemischt und/oder klassiert wird.

4. Verfahren nach einem der Ansprüche 1 bis 3, **dadurch gekennzeichnet, dass** das Verhältnis von Aluminiumoxid zu Siliziumoxid in dem Abdeckmaterial größer oder gleich eins ist.

5. Verfahren nach einem der Ansprüche 1 bis 4, **dadurch gekennzeichnet, dass** das Abdeckmaterial jeweils bis zu 1 % Titanoxid, Eisenoxid, Magnesiumoxid und Kalziumoxid enthält.

6. Verfahren nach einem der Ansprüche 1 bis 5, **dadurch gekennzeichnet, dass** sich die Metallschmelze in einem Stahlverteiler oder in einer Stahlgießpfanne befindet.

7. Verfahren nach einem der Ansprüche 1 bis 6, **dadurch gekennzeichnet, dass** das Abdeckpulver auf eine direkt auf der Metallschmelze befindliche Zwischenschicht aus reaktiver Kalzium-Aluminatschlacke aufgegeben wird.

8. Verfahren nach einem der Ansprüche 1 bis 7, **dadurch gekennzeichnet, dass** dem Abdeckmaterial ein Kohlenstofflieferant, wie z.B. Petrolkoks, zugesetzt wird.

9. Verfahren nach einem der Ansprüche 1 bis 8, **dadurch gekennzeichnet, dass** das Abdeckmaterial in Kunststoffpolymerbeuteln portionsweise abgepackt auf die Oberfläche der Metallschmelze aufgegeben wird.

10. Verfahren nach einem der Ansprüche 1 bis 9, **dadurch gekennzeichnet, dass** dem Abdeckmaterial Pflanzenasche zugesetzt wird.

11. Verfahren nach Anspruch 10, **dadurch gekennzeichnet, dass** das Abdeckmaterial zu einem Anteil von bis zu 40 Gew.-%, vorzugsweise 20 Gew.-%, aus Pflanzenasche besteht.

12. Verwendung eines siliziumoxid- und aluminiumoxidhaltigen, feinkörnigen Materials zur Abdeckung einer in einem metallurgischen Gefäß befindlichen Metallschmelze, **dadurch gekennzeichnet, dass** das Abdeckmaterial ein künstliches Zeolithmaterial ist, dass im wesentlichen gleiche Anteile von Siliziumoxid und Aluminiumoxid enthält, wobei das Abdeckmaterial eine enge Verteilung von Korndurchmessern aufweist, derart, dass weniger als 20 % der Körner einen Durchmesser von weniger als 30 µm oder mehr als 125 µm haben und wobei die Körner des Abdeckmaterials im wesentlichen kugelförmig sind.

13. Verwendung eines siliziumoxid- und aluminiumoxidhaltigen, feinkörnigen Materials zur Abdeckung einer in einem metallurgischen Gefäß befindlichen Metallschmelze, **dadurch gekennzeichnet, dass** das Abdeckmaterial eine Mischung aus
- mindestens 60 Gew.-% künstlichem Zeolithmaterial, das im wesentlichen gleiche Anteile von Siliziumoxid und Aluminiumoxid enthält, wobei das Zeolithmaterial eine enge Verteilung von Korndurchmessern aufweist, derart, dass weniger als 20 % der Körner einen Durchmesser von weniger als 30 µm oder mehr als 125 µm haben, und
- bis zu 40 Gew.-% Pflanzenasche ist.

14. Verwendung nach Anspruch 13, **dadurch gekennzeichnet, dass** es sich bei der Pflanzenasche um Reisspreuasche handelt.

## Claims

1. A method of treating a molten metal disposed in a metallurgical vessel, wherein a silicon oxide- and aluminium oxide-bearing, fine-grain covering material is applied to the surface of the molten metal, **characterised in that** the covering material is a synthetic zeolite material which contains substantially equal proportions of silicon oxide and aluminium oxide, wherein the covering material has a close distribution of grain diameters in such a way that less than 20% are of a diameter of less than 30 µm or more than 125 µm.

2. A method according to claim 1 **characterised in that** the grains of the covering material are substantially spherical.

3. A method according to claim 1 or claim 2 **characterised in that** the covering material is mixed and/or graded prior to being applied to the surface of the molten metal to achieve the desired distribution.

4. A method according to one of claims 1 to 3 **characterised in that** the ratio of aluminium oxide to silicon oxide in the covering material is greater than or equal to one.

5. A method according to one of claims 1 to 4 **characterised in that** the covering material contains up to 1% of titanium oxide, iron oxide, magnesium oxide and calcium oxide respectively.

6. A method according to one of claims 1 to 5 **characterised in that** the molten metal is disposed in a steel distributor or in a steel casting ladle.

7. A method according to one of claims 1 to 6 **characterised in that** the covering powder is applied to an intermediate layer which is disposed directly on the molten metal and which comprises reactive calcium-aluminate slag.

8. A method according to one of claims 1 to 7 **characterised in that** a carbon supplier such as for example petroleum coke is added to the covering material.

9. A method according to one of claims 1 to 8 **characterised in that** the covering material is applied to the surface of the molten metal packed in portion-wise manner in plastic polymer bags.

10. A method according to one of claims 1 to 9 **characterised in that** vegetable ash is added to the covering material.

11. A method according to claim 10 **characterised in that** the covering material comprises vegetable ash in a proportion of up to 40% by weight, preferably 20% by weight.

12. Use of a silicon oxide- and aluminium oxide-bearing fine-grain material for covering a molten metal disposed in a metallurgical vessel, **characterised in that** the covering material is a synthetic zeolite material which contains substantially equal proportions of silicon oxide and aluminium oxide, wherein the covering material has a close distribution of grain diameters in such a way that less than 20% of the grains are of a diameter of less than 30 µm or more than 125 µm and wherein the grains of the covering material are substantially spherical.

13. Use of a silicon oxide- and aluminium oxide-bearing fine-grain material for covering a molten metal disposed in a metallurgical vessel, **characterised in that** the covering material is a mixture comprising
- at least 60% by weight of synthetic zeolite material which contains substantially equal proportions of silicon oxide and aluminium oxide, wherein the zeolite material has a close distribution of grain diameters in such a way that less than 20% are of a diameter of less than 30 µm or more than 125 µm, and
- up to 40% by weight of vegetable ash.

14. Use according to claim 13 **characterised in that** the vegetable ash is rice chaff ash.

## Revendications

1. Procédé pour usiner un métal liquide se trouvant dans un récipient métallurgique, un matériau de couverture à grains fins, contenant de l'oxyde de silicium et de l'oxyde d'aluminium, étant appliqué sur la surface du métal liquide,
**caractérisé en ce que** le matériau de couverture est un matériau zéolithe plastique qui contient des proportions sensiblement égales d'oxyde de silicium et d'oxyde d'aluminium, le matériau de couverture présentant une répartition étroite des diamètres des grains, de telle sorte que moins de 20 % ont un diamètre inférieur à 30 µm ou supérieur à 125 µm.

2. Procédé selon la revendication 1, **caractérisé en ce que** les grains du matériau de couverture sont sensiblement de forme sphérique.

3. Procédé selon l'une quelconque des revendications 1 ou 2, **caractérisé en ce que** le matériau de couverture est mélangé et/ou trié avant l'application sur la surface du métal liquide, pour obtenir la répartition souhaitée.

4. Procédé selon l'une quelconque des revendications 1 à 3, **caractérisé en ce que** le rapport entre l'oxyde d'aluminium et l'oxyde de silicium dans le matériau de couverture est supérieur ou égal à un.

5. Procédé selon l'une quelconque des revendications 1 à 4, **caractérisé en ce que** le matériau de couverture contient jusqu'à respectivement 1 % d'oxyde de titane, d'oxyde de fer, d'oxyde de magnésium et d'oxyde de calcium.

6. Procédé selon l'une quelconque des revendications 1 à 5, **caractérisé en ce que** le métal liquide se trouve dans un répartiteur à acier ou dans une poche à acier.

7. Procédé selon l'une quelconque des revendications 1 à 6, **caractérisé en ce que** la poudre de couverture est appliquée sur une couche intermédiaire à base de laitier d'aluminate de calcium réactif se trouvant directement sur le métal liquide.

8. Procédé selon l'une quelconque des revendications 1 à 7, **caractérisé en ce qu'**au matériau de couverture est ajouté un apport carboné comme le coke de pétrole.

9. Procédé selon l'une quelconque des revendications 1 à 8, **caractérisé en ce que** le matériau de couverture, conditionné en sachets plastiques polymères par portions, est appliqué sur la surface du métal liquide.

10. Procédé selon l'une quelconque des revendications 1 à 9, **caractérisé en ce qu'**au matériau de couverture est ajoutée de la cendre végétale.

11. Procédé selon la revendication 10, **caractérisé en ce que** le matériau de couverture est constitué à base de cendre végétale dans une proportion de 40 % du poids au maximum, de préférence de 20 % du poids.

12. Utilisation d'un matériau à grains fins contenant de l'oxyde de silicium et de l'oxyde d'aluminium destiné à la couverture d'un métal liquide se trouvant dans un conteneur métallurgique, **caractérisée en ce que** le matériau de couverture est un matériau zéolithe plastique qui contient des proportions sensiblement égales d'oxyde de silicium et d'oxyde d'aluminium, le matériau de couverture présentant une répartition étroite des diamètres de grains, de telle sorte que moins de 20 % ont un diamètre inférieur à 30 µm ou supérieur à 125 µm, et les grains du matériau de couverture étant sensiblement de forme sphérique.

13. Utilisation d'un matériau à grains fins contenant de l'oxyde de silicium et de l'oxyde d'aluminium pour la couverture d'un métal liquide se trouvant dan un conteneur métallurgique, **caractérisée en ce que** le matériau de couverture est un mélange à base
- d'au moins 60 % du poids de matériau zéolithe plastique, qui contient des proportions sensiblement égales d'oxyde de silicium et d'oxyde d'aluminium, le matériau de couverture présentant une répartition étroite des diamètres de grains, de telle sorte que moins de 20 % ont un diamètre inférieur à 30 µm ou supérieur à 125 µm et
- de 40 % au maximum du poids de cendre végétale.

14. Utilisation selon la revendication 13, **caractérisée en ce qu'**il s'agit dans le cas de la cendre végétale, de cendre de balle de riz.
